# EUROPEAN PATENT APPLICATION

(11) **EP 4 438 398 A1**
(43) Date of publication of application: **02.10.2024**
(21) Application number: 24158047.1
(22) Date of filing: 16.02.2024
(51) Int. Cl.: B60N 2/00, B60N 2/02

(54) **SYSTEMS AND METHODS FOR DETERMINING ONE OR MORE SEATING PARAMETERS**

(30) Priority: 09.03.2023 US 202318181006
(71) Applicant: Deere & Company, Moline, IL 61265 (US)
(72) Inventor: YANDE, SARANG MILIND, 61863 Mannheim (DE)
(74) Representative: Stein, Stefan

(57) **Abstract**

Systems and methods for establishing a seat parameter may include determining one or more physical characteristics of an operator using one or more sensors. The one or more sensors sense an operator, and, using the output of the one or more sensors, the one or more physical characteristics of the operator are determined. One or more seat parameters are determined using the physical characteristics of the operator, and a seat of a vehicle or machine is automatically configured based on the determined seat parameters.

## Description

### Field of the Disclosure

The present disclosure relates generally to determining one or more parameters for a seat for an operator of a vehicle and, particularly, to determining one or more seating parameters for an operator of an agricultural vehicle.

### Background of the Disclosure

There are a variety of different types of agricultural machines. Example agricultural machines include combine harvesters, sugar cane harvesters, cotton harvesters, self-propelled forage harvesters, and self-propelled windrowers. Generally, agricultural machines include a cab in which an operator resides while operating the vehicle. The cab can include one or more seats to accommodate the operator and, in some instances, another occupant of the cab. The cab also includes controls for directing operations of the agricultural vehicle.

### Summary of the Disclosure

An aspect of the present disclosure is directed to system for automatically establishing a seating parameter of a seat for an operator of a vehicle. The system may include a sensor configured to sense an aspect of a body of an operator of the vehicle and generate a signal representative of the sensed aspect of the body of the operator; an adjustable seat; and a controller. The controller may include a processor configured to: receive the signal from the sensor; identify a physical characteristic of the operator based on the received signal; determine a seating parameter based on the physical characteristic; and output a control signal representative of the determined seating parameter to the adjustable seat to alter a configuration of the seat.

Another aspect of the present disclosure is directed to a method of automatically establishing a seating parameter of a seat for an operator of a vehicle. The method may include sensing, with a sensor, an operator of a vehicle; outputting a signal representative of the sensed operator of the vehicle; determining, with an electronic controller, a seating parameter based on the outputted signal; and adjusting a configuration of a seat based on the determined seating parameter.

The various aspects of the present disclosure may include one or more of the following features. The sensor may be configured to detect the operator at a location external of a cab of the vehicle. The sensor may be configured to sense the body of the operator of the vehicle at a location internal of a cab of the vehicle. The sensor may be a first sensor configured to sense a first portion of the body of an operator of the vehicle and generate a first signal representative thereof. A second sensor may be configured to sense a second portion of the body of the operator and generate a second signal representative of the second portion of the body of the operator. The processor of the controller may be configured to: receive the first signal from the first sensor and receive the second signal from the second sensor. The processor may be configured to: identify a first physical characteristic of the operator based on the first signal and identify a second physical characteristic of the operator based on the second signal. The processor may be configured to determine the seating parameter based on the first physical characteristic and the second physical characteristic. The seating parameter may include at least one of a height of the adjustable seat, a lateral position of the adjustable seat, a longitudinal position of the adjustable seat, an amount of recline of the adjustable seat, and an amount of swivel of the adjustable seat. The seating parameter may include an angular tilt of a steering column. The physical characteristic may include at least one of an anthropometric parameter or a weight of the operator. The anthropometric parameter may include at least one of a length of at least a portion of an arm of the operator, a length of at least a portion of a leg of the operator, and a length of a torso of the operator. The sensor may be a weight sensor configured to detect a weight of the operator. The adjustable seat may include the weight sensor. The sensor may be an image sensor. The image sensor may be at least one of a camera, a lidar, or a radar.

The various aspects of the present disclosure may include one or more of the following features. Sensing, with a sensor, an operator of a vehicle may include capturing an image of the operator. Determining, with an electronic controller, a seating parameter may include determining a physical characteristic of the operator of the vehicle. Determining a physical characteristic of the operator of the vehicle may include determining an anthropometric parameter of the operator of the vehicle. Sensing, with a sensor, an operator of a vehicle may include sensing a weight of the operator of the vehicle. Adjusting a configuration of a seat based on the determined seating parameter may include at least one of adjusting a vertical seating position, a lateral seating position, a longitudinal seating position, an amount of seat recline, an amount of seat swivel, and an angular position of a steering column of the vehicle. Sensing, with a sensor, an operator of a vehicle may include sensing the operator of the vehicle with a plurality of sensors. Outputting a signal representative of the sensed operator of the vehicle may include outputting a signal from each of the plurality of sensors. Each sensor output may correspond to a different portion of a body of the operator of the vehicle.

Other features and aspects will become apparent by consideration of the detailed description and accompanying drawings.

### Brief Description of the Drawings

The detailed description of the drawings refers to the accompanying figures in which:
FIG. 1 is a perspective view of an example self-propelled forage harvester, according to some implementations of the present disclosure.
FIG. 2 is a detail view of a portion of a forward end of the self-propelled forage harvester of FIG. 1.
FIG. 3 is a schematic view of an example control system configured to determine seat parameters for an operator and automatically apply the determined seat parameters to a seat of a vehicle or equipment, according to some implementations of the present disclosure.
FIG. 4 is a flow chart of an example method for determining seat parameters for an operator and automatically applying the determined seat parameters, according to some implementations of the present disclosure.
FIG. 5 is a block diagram illustrating an example computer system used to provide computational functionalities associated with described algorithms, methods, functions, processes, flows, and procedures as described in the present disclosure, according to some implementations of the present disclosure.

### Detailed Description

For the purposes of promoting an understanding of the principles of the present disclosure, reference will now be made to the implementations illustrated in the drawings, and specific language will be used to describe the same. It will nevertheless be understood that no limitation of the scope of the disclosure is intended. Any alterations and further modifications to the described devices, systems, or methods and any further application of the principles of the present disclosure are fully contemplated as would normally occur to one skilled in the art to which the disclosure relates. In particular, it is fully contemplated that the features, components, and/or steps described with respect to one implementation may be combined with the features, components, and/or steps described with respect to other implementations of the present disclosure.

The present disclosure is directed to a systems and methods for automatically detecting one or more parameters for a seat of a vehicle for an operator. In some instances, the automatically determined parameter or parameters are automatically applied to the seat. The present disclosure provides examples in the context of agriculture. Particularly, examples in the context of a self-propelled forage harvester are used. The scope of the present disclosure is applicable to other types of agricultural equipment, such as combine harvester, self-propelled windrowers, and tractors Moreover, the scope of the present disclosure is not limited to agricultural vehicles and equipment. Rather, the concepts described herein are applicable to other vehicle types, such as automobiles, construction equipment, aircraft, trucks, boats, cranes, and other equipment or vehicles that utilize include a seat from which the operator operates the vehicle or equipment.

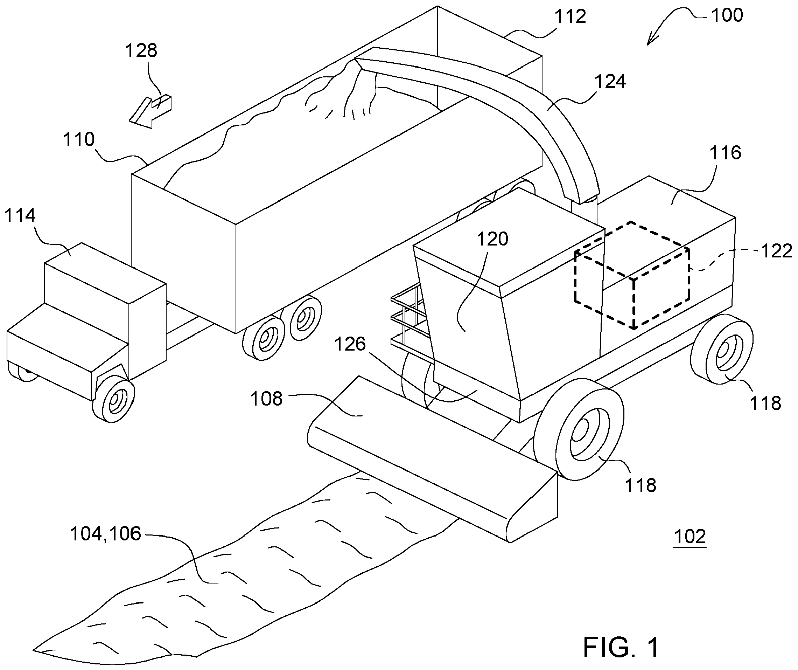

FIG. 1 is a perspective view of an example self-propelled forage harvester (SPFH) 100 that is moving through a field 102 to collect crop material 104 formed into windrows 106. The SPFH 100 includes an implement 108 that collects the crop material 104 and transfers the crop material 104 to a receiving vehicle 110. In the illustrated example, the receiving vehicle 110 is a trailer 112 pulled by a truck 114. In other implementations, the receiving vehicle 110 may have other configurations.

The SPFH 100 includes a body 116, ground engaging members 118 attached to the body 116 for transporting the SPFH 100 over the ground, a cab 120, a power source 122 within the body 116 for providing power to the SPFH 100, and an unloader 124. The cab 120 defines a compartment in which an operator resides while operating the SPFH 100. The implement 108 is connected to a forward end 126 of the SPFH 100 and is configured to collect the crop material 104. Example power sources 122 include an internal combustion engine and an electric motor. Example ground engaging member 118 include wheels and tires and tracks.

As the SPFH 100 moves through a field in a forward direction indicated by arrow 128, the implement 108 engages and harvests the crop material 104 in the windrows 106. The SPFH 100 transfers the crop material 104 to the receiving vehicle 110 via the unloader 124. As a result, the crop material 104 is collected in the receiving vehicle 110 for subsequent transport.

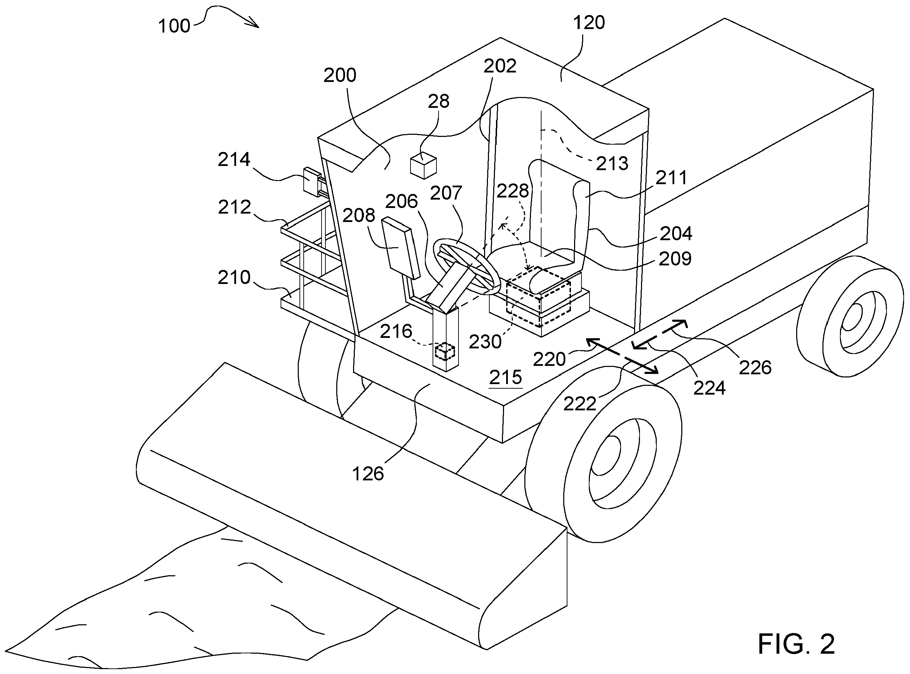

FIG. 2 is a detail view of a portion of the forward end 126 of the SPFH 100 and, particularly, of the cab 120. At the forward end 126, the cab 120 includes a windshield 200, a side door 202 that provides ingress and egress for the operator into and out of the cab 120, an adjustable seat 204, an adjustable steering column 206, a steering wheel 207 coupled to the steering column 206, and various other controls 208 for controlling various operations of the SPFH 100. The seat 204 is connected to a floor 215 of the cab 120. The seat 204 includes a seat base 209 and a seat back 211 that is pivotable relative to the seat base 209. Thus, the seat back 209 is pivotably adjustable relative to the seat base 209 so as to alter a seat angle between seat back 211 and the seat base 209. An amount of angular adjustment between the seat base 209 and the seat back 211 defines an amount of reline of the seat 204.

Although a steering wheel 207 is illustrated, in other implementations, another type of control device may be used to control a direction of travel or speed of the SPFH 100. For example, a control stick may be used for directional purposes. In such instances, the steering column 206 may be offset (e.g., laterally offset) from the seat 204 to provide comfortable access to the control stick by the operator.

Also at the forward end 126 is a platform 210 on which an operator can stand while entering or exiting the cab 120. A railing 212 is provided adjacent to the platform 210 to prevent the operator from falling from the platform 210. Also provided is a first sensor 214 positioned on the SPFH 100 to obtain one or more images of the operator while located on the platform 210. In some implementations, the first sensor 214 is coupled to an exterior of the SPFH 100, such as to an exterior of the cab 120. In other implementations, the first sensor 214 may be located on an interior of the cab 120. The first sensor 214 is positioned so as to sense the operator while the operator is located on the platform 210. In other implementations, the first sensor 214 may be positioned on the SPFH 100 so as to sense the operator while the operator is standing on the ground.

The SPFH 100 also includes a second sensor 216. The second sensor 216 is positioned within the cab 120 to sense a lower portion of the operator, such as the legs of the operator, when the operator is sitting on the adjustable seat 204. For example, in some implementations, the second sensor 216 may be located on or otherwise connected to the steering column 206 and directed towards the seat in order to sense the legs of the operator when sitting in the seat 204.

The SPFH 100 also includes a third sensor 218. In the illustrated example, the third sensor 218 is provided inside of the cab 120 and directed towards the seat 204 so as to sense at least an upper portion of the operator when sitting in the seat 204. In other implementations, the third sensor 218 is located external to the cab 120 but directed towards the seat 204 so as to sense the operator when sitting in the seat 204.

The sensors 214, 216, and 218 are configured to capture one or more images of the operator using various frequencies of radiation. For example, in some instances, one or more of the sensors 214, 216, and 218 may be a camera configured to detect images of the operator using visible light. The images may be video images or still images or a combination thereof. In other implementations, one or more of the sensor 214, 216, and 218 may be, for example, lidar, radar, infrared sensors, or other types of sensors that utilizes wavelengths other than visual wavelengths to capture information used to generate an image of an operator. In some instance, one or more of the sensors 214, 216, and 218 are movable so that a field of view captured by the respective sensor encompasses the operator. That is, one or more of the sensors 214, 216, and 218 may be moveable so that the respective sensor is able to capture a portion or portions of the body of the operator so that physical characteristics of the body of the operator (e.g., anthropometric measurements) can be reliably determined. Movement of the one or more sensors 214, 216, and 218 may be controlled via a controller, as described in more detail below. In some implementations, one or more of the sensors operate automatically to sense the operator.

The captured images from sensors 214, 216, or 218, whether based on visual wavelengths or wavelengths other than visual wavelength, are used to determine physical characteristics of the operator. For example, the sensor 214 may be positioned to collect one or more images of the operator while standing on the platform 210 or on the ground. In some instances, the one or more images collected by the first sensor 214 is used to determine an overall height of the operator or a length of one or more other parts of the operator, such as the length of the arms or legs. The second sensor 216 may be positioned to collect one or more images of the lower legs of the operator, which can be used to determine the length of the lower legs of the operator. The third sensor 218 may be positioned to collect one or more images of the upper torso of the operator. The images captured using the third sensor 218 may be used to determine a length of the torso, a length of the arms, such as a length of the upper arm, the lower arm, or both. Further, in some implementations, an image captured by any of the sensors 214, 216, and 218 is used to determine a plurality of physical characteristics of the operator. For example, an image captured from one of the sensors 214, 216, and 218 is used to determine a plurality of anthropometric measurements of the operator, e.g., the operator's height, a length of the operator's arm or portion thereof, or a length of the operator's leg or portion thereof.

Regarding the images collected from the first sensor 214, the images are processed, such as with a processor of a computer system (such as computer system 500, described in more detail below), to detect physical aspects of the operator. As explained above, the images collected with the first sensor 214 can be used to detect, for example, a length of the arms of the operator, the length of the torso of the operator, or a total height of the operator. In some instances, additional or different physical characteristics of the operator can be determined using the images collected by the sensors 214, 216, or 218. Similarly, although the images collected from the second sensor 216 are described as being used to determine a length of the lower legs of the operator, the images can be used to determine other information, such as whether the feet of the operator are touching the floor 207 of the cab 120. Further, the images collected by the third sensor 218 may also be used to determine other physical aspects of the operator, such as a distance between a top of the head and shoulders of the operator.

Although example images and the type of information that may be gleaned from those images are described, other sensors may be used to collect one or more other images that are used to determine other characteristics of the operator.

Identifying different body parts of the operator's body and the physical characteristics (e.g., anthropometric measurements) of those portions of the body may be performed using image analysis techniques. For example, the following image analysis techniques may be used: two-dimensional (2D) object recognition, three-dimensional (3D) object recognition, image segmentation, motion detection (e.g., single particle tracking), video tracking, optical flow, 3D pose estimation, pattern recognition, and object recognition, to name a few. These example image analysis techniques are not exhaustive. Thus, other types of image analysis techniques may be employed to detect an operator within an image. Further, in some implementations, classification approaches using machine learning algorithms are also used to identify features, such as different parts of the body of the operator. Example machine learning algorithms include, but are not limited to, supervised learning algorithms, unsupervised learning algorithms, semi-supervised learning algorithms, and reinforcement learning algorithms.

In some implementations, neural networks, including neural networks using deep learning, may also be used to identify and classify different parts of the body of the operator present in an image. Example neural networks include perception neural networks, Feed-forward neural networks, convolutional neural networks, recurrent neural networks, and autoencoders, to name only a few. Other types of neural networks are also within the scope of the present disclosure.

A controller, such as the computer system 500, may be used identify the operator and physical characteristics of the operator. Physical characteristics of the operator include the parts of the body of the operator present in the collected images as well as to determine the respective sizes of the operator's body and parts thereof. Physical characteristics also includes anthropometric information of the operator's body (e.g., the sizes of the body and associated parts of the body of the operator). With the physical characteristics determined, seating parameters for the adjustable seat 204 are determined. For example, using the determined physical characteristics, one or more of the following seat parameters may be determined: a seating height, a lateral seating position (i.e., a position of the seat 204 in the lateral direction indicated by arrows 220 and 222), a longitudinal seating position (i.e., a position of the seat 204 in the longitudinal direction indicate by arrows 224 and 226), an angular position of the steering column (indicated by angle 228), a seat reclining position (i.e., an amount of inclination of the seat back 211 relative to the seat base 209), and a swivel position (i.e., a rotation of the seat 204 relative to the floor 207, such as about a vertical axis 213). Additional, fewer, or different seat parameters may also be determined using the information obtained from the collected images. While seat parameters are described within the present disclosure, it is understood that the scope of the present disclosure encompasses a single seat parameter or a plurality of seat parameters. Thus, for the examples contained herein that describe "seat parameters," the description is intended to encompass one or more seat parameters.

In some implementations, the seat parameters are applied automatically, thereby avoiding the need for the manually set the seat. Thus, application of the seat parameters changes a configuration of the seat. For example, application of the seat parameters may cause movement of the seat 204 vertically to a height that corresponds, for example, to a height of the lower leg while still permitting the feet of the operator to rest on the floor 207 of the cab 120. As a result, in some instances, a seating position can be determined that avoids the feet of the operator not being in contacting the floor 207. The seat parameters may cause the seat 204 to move longitudinally, for example, to accommodate a length of the leg (e.g., the length of the upper leg, the size of the lower leg, or both). The tilt of the steering column 206 may selected based on a size of the arms (or portion thereof, e.g., the lower arm or the upper arm), the size of the torso, or both. A lateral position of the seat 204 may be selected to center the operator in front of the steering column 206. In some instances, the seat 204 may be laterally offset from the steering column 206 or the steering wheel 207 connected to the steering column 206 to provide ease of access to the operator. Once the operator is sitting on the seat 204, the lateral position of the seat 204 is moved to center the operator in front of the steering wheel 207. Movement of the steering column 206 after the operator has taken a seat in the seat 204 may be initiated when the weight sensor 230 has detected a weight above a threshold amount.

In some implementations, a weight of the operator is determined. For example, the seat 204 may include a weight sensor 230, as shown in FIG. 2. The weight sensor 230 senses a weight of the operator when the operator is present on the seat 204. In some instances, when the weight sensor 230 detects the presence of the operator, such as by sensing a weight above a threshold amount, one or more of the sensors 216 and 218, are operated to capture one or more images of the operator. Capturing images may involve moving one or more of the sensors 214, 216, or 218.

The sensed weight may be used to determine a height of the seat 204. For example, the seat 204 may include suspension that allows the seat 204 absorb disturbances experienced by the SPFH 100 as the SPFH 100 moves along the ground. This suspension may include spring. Thus, when the operator sits on the seat 204, the seat 204 is displaced in response to compression of the spring by the weight of the operator. Thus, in some instances, the sensed weight is used to determine a vertical position of the seat 204, taking into consideration an amount of displacement caused by compression of the spring in response to the weight of the operator. The spring of the seat 204 may be any type of spring that elastically deflects in response to a force, such as a coil spring, air spring, leaf spring, or any other type of spring.

In some implementations, a plurality of sets of seat parameters are determined based on the sensor input provided by the sensors 214, 216, 218, and 230. In some instances, each set of seat parameters includes a vertical seat position, a lateral seat position, a lateral seat position, a seat recline position, a seat swivel position, and a steering column angle. In other instances, each set may include additional, fewer, or different seat parameters.

The first set of seat parameters is automatically applied to the seat 204. The operator may cycle to the next set of determined seat parameters, such as by providing an input, such as by interfacing with a control within the cab 120. The operator can cycle through each of the set of seat parameters. The operator may settle on one of the sets of seat parameters, such as the set of seat parameters that is most comfortable to the operator. In other instances, the operator can modify the determined seat parameters, such as by adjusting one or more of the seat parameters. In some instances, the operator can adjust the seat parameters as desired. For example, in some implementations, each of the seat parameters is adjustable individually via an interface provided in the cab 120.

In some implementations, the seat parameters associated with a particular operator is saved such that the seat parameters may be applied automatically for each operator in the future. The determined seat parameters may be saved locally on a vehicle, such as locally on the SPFH 100, and reapplied when the particular operator, once again, operates the vehicle. In other implementations, the determined seat parameters are saved remotely, such as in a remote database (e.g., remotely saved in cloud storage). In such instances, the determined seat parameters can be applied to different vehicles connected to the remote database when the operator is detected in relation to a particular vehicle. For example, an operator may be detected by a sensor of another vehicle, which results transmission of the seat parameters to the vehicle. Those seat parameters are then applied to a seat in the vehicle. In this way, preferred seat parameters for a particular operator can be made portable and applied to different machines or vehicle without input by the operator. Further, by using previously determined remotely stored seat parameters, determining new seat parameters, such as with one or more sensors on the particular machine or vehicle that the operator intends to operate, is avoided. In some instances, identification of the operator may be determined using one or more of the sensors. For example, one or more of the sensors may utilize facial recognition to identify an operator. In other instances, another type of characteristic of the operator, such as another physical characteristic, is used to identify the operator. In some instances, a single sensor, such as a camera, is used to identify the operator.

In other instances, the identity of the operator may be determined in other ways, such as with the use of an identification credential. For example, a user may have an electronic badge a smart device (e.g., a smart phone or watch) that is detected by an electronic scanner to determine the identity of the operator. Example media may include radio frequency identification (RFID), bar code, QR codes, or other types of identification technologies. In other implementations, the operator may input a personal identifier, such as a username and password, into an input device to identify the operator in relation to the vehicle or equipment. Using one or more of these types of identification approaches, the identify of the operator is identified, and the seat parameters are obtained and applied to the seat of the vehicle or equipment to alter a configuration of the seat.

In some instances, the physical characteristics of an operator may be used to adjust other features or components of a vehicle or equipment. For example, the physical characteristics may be used to adjust a position of a visualization device, such as side view mirrors or rear-view mirrors. Adjustment of a lateral position, a longitudinal position, or an angular position, for example, of a visualization device may be altered based on the determined physical characteristics of the operator.

Still further, in addition to physical characteristics of an operator, an operational characteristic of the vehicle may also be used to determine seat parameters or parameters of other components or features of a vehicle. For example, in some implementations, a driving mode of the vehicle is used to determine seat parameters of the vehicle. For example, a transport mode of the vehicle may be selected. In some instances, a transport mode involves moving a vehicle from one location to another, for example, in preparation to performing an operation using the vehicle. An example of a transport mode involves driving a vehicle, such as the SPFH 100, over one or more roads to move the SPFH 100 to a field where the SPFH 100 is to collect crop material within the field. In the transport mode, the seat back 211 may have a more vertical orientation relative to the seat base 209 (i.e., a reduced amount of seat recline) when the vehicle is being moved over roadway so as to impart the operator with a more vertical posture. The more vertical posture may place the operator in a more alert condition so as to avoid other obstacles traveling along the road, e.g., other vehicles, or other objects on the road, e.g., pedestrians.

Alternatively, the vehicle may be placed in a field mode. In some instances, field mode involves moving the vehicle through a field to perform an operation for which the vehicle is intended to perform, such as, in the case of the SPFH 100, to collect crop material arranged in a windrow. In the field mode, the seat parameters may involve a more reclined position of the seat back 211 relative to the seat base 209. The more reclined position may provide an increased amount of comfort to the operator in an environment where there are fewer obstacles with which the vehicle may come into contact. For example, in a field, there are fewer, if any, road vehicle or pedestrians or other objects with which the vehicle could collide. Further, for some vehicles, when in field mode, the vehicle may include a self-driving capability that requires less awareness on the part of the operator during operation of the vehicle. Moreover, when operating in a field, a time period during which the vehicle operates may be an extended time period. Thus, comfort of an operator may be more desirable.

Consequently, seat parameters may be determined using an operational characteristic of the vehicle (e.g., a field mode or a transport mode) in addition to physical characteristics of the operator of the vehicle (e.g., anthropometric measurements).

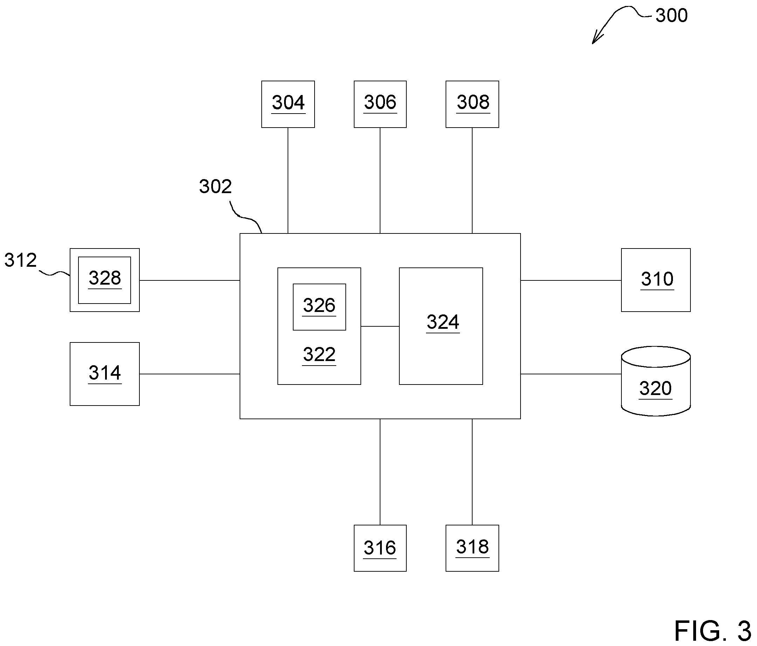

FIG. 3 is a schematic view of an example control system 300 for automatically determining seat parameters for a vehicle using one or more sensors. The control system 300 includes an electronic controller 302, sensors 304, 306, and 308, a driving mode selector 310, a display 312, an input device 314, an adjustable vehicle seat 316, another controllable subsystem 318 that is controllable in response to sensed parameters determined using one or more of the sensors 304, 306, 308, and a driving mode selector 310. The system 300 may also include or be communicably coupled to a remote database 320, which may be in the form of cloud storage, a remote server, or some other type of electronic storage configured to store information such as seat parameters. The various components of the control system 300 are communicably coupled to the controller 302, such as via a wired or wireless connection.

The illustrated control system 300 is provided merely as an example. One or more components or features of the example control system 300 may be omitted or one or more components or features may be added and still remain within the scope of the present disclosure. For example, in some instances, the display 312, the controllable subsystem 318, or the driving mode selector 310 may be omitted.

In some implementations, the controller 302 is a computer system, such as computer system 500 described in more detail below. The controller 302 includes a processor 322 communicably coupled to a memory 324. Additional details of the controller 302, such as processor 322 and memory 324, are described below in the context of computer system 500. The memory 324 communicates with the processor 322 and is used to store programs and other software, information, and data. The processor 322 is operable to execute programs and software and receive information from and send information to the memory 324. Although a single memory 324 and a single processor 322 are illustrated, in other implementations, a plurality of memories, processors, or both may be used. Although the processor 322 and the memory 324 are shown as being local components of the controller 302, in other implementations, one or both of the processor 322 and memory 324 may be located remotely. Software 326, such as in the form of an application or program, is executed by the processor 322 to control operation of the control system 300, as described in more detail below. Particularly, the software 326 includes executable instructions operable to determine seat parameters and, in some implementations, parameters of other features of a vehicle, in response to input received from one or more of the sensors 304, 306, and 308 and, in some instances, input from drive mode selector 310.

The input device 314 is communicably coupled via a wired or wireless connection. Example input devices 314 include a keyboard, keypad, one or more buttons, a slider bar, a dial, a knob, a mouse, or a joystick. The display 312 is communicably coupled to the controller 302 via a wired or wireless connection. The display 312 displays information, such as information related to the operation of control system 300. For example, information displayed by the display 312 may include seat parameters for a seat of a vehicle, such as a seat height, a lateral seat position, a longitudinal seat position, a swivel position, and a seat back position (e.g., an amount of recline of a seat back). In some instances, the display 312 may display, for example, a weight of an operator, a driving mode, and an identify of an operator. In some instances, the information displayed by the display 312 is displayed via a graphical user interface (GUI) 328. Example displays include cathode ray tubes (CRT), liquid crystal displays (LCDs), or plasma displays. Other types of displays are also within the scope of the present disclosure. In some implementations, the display 312 is a touch screen that is operable to receive input from a user via a user's touch. In some implementations in which the display 312 is a touch screen, the input device 314 is omitted.

In some implementations, the sensors 304, 306, and 308 may be or include sensors such as, for example, a camera, a lidar, a radar, or another type of sensor configured to capture an image, such as an image of an operator. In some instances, example sensors may include a weight sensor to sense a weight of the operator. Further, although three sensors are illustrated, in other implementations, the control system 300 may include additional or fewer sensors. In some implementations, the controllable subsystem 318 may be a visualization device, such as a side view mirror or a rear-view mirror. In some implementations, the controllable subsystem 318 may be omitted.

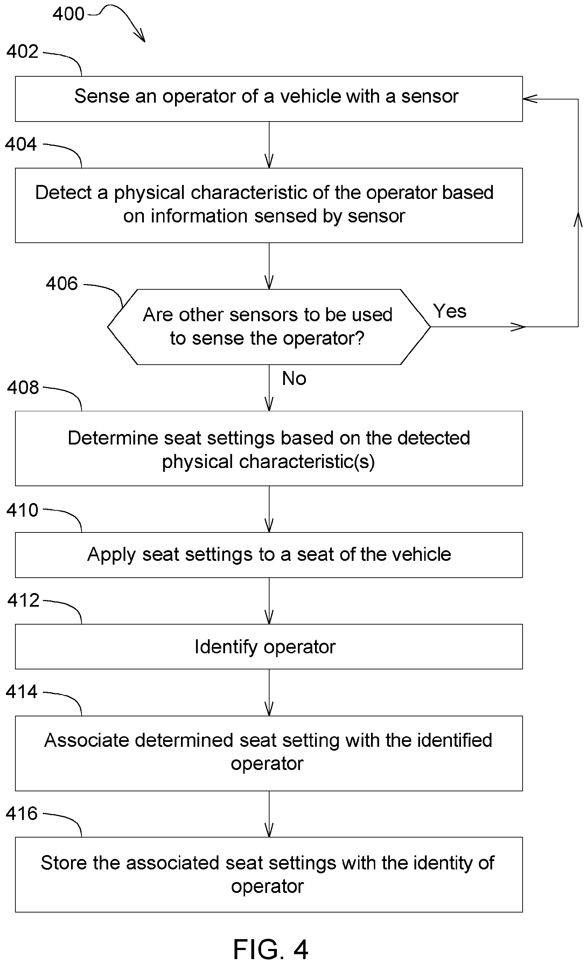

FIG. 4 is a flowchart of an example method 400 for automatically determining seat parameters of a vehicle, such as a SPFH. For the purpose of the description of FIG. 4, example SPFH 100 is referenced. However, the scope of the disclose is not so limited. At 402, an operator of the SPFH 100 is sensed with a sensor. For example, one or more sensors, such as sensors 214, 216, 218, and 230, sense an aspect of the operator. For example, one or more images of the operator may be captured, a weight of the operator may be detected, or both. At 404, a physical characteristic of the operator is determined from the sensed aspect of the operator. For example, one or more anthropometric measurements or other physical characteristics of the operator may be determined based on an image collected by the sensor. Example anthropometric measurements include a size of a portion of the body of the operator, such as a length of an arm or a portion of the arm, a length of a leg or a portion of a leg, a length of the torso of the operator. At 406, a determination is made whether additional sensors remain to sense an attribute of the operator. If there are additional sensor to sense the operator, then the method 400 returns to 402, and the next sensor or sensors sense the operator, and, at 404, one or more physical characteristics of the operator is obtained from the output of that sensor or sensors.

In some instances, a sensor is made to sense the operator in response to sensing of the operator by another sensor. For example, sensor 216, 218, or both in the cab 120 may sense the operator after the weight sensor 230 detects the presence of the operator on the seat 204 (such as by the weight sensor 230 sensing a weight above a selected threshold). Thereafter, one or both of the sensors 216 and 218 capture an image of the operator while the operator is seated.

When there are no additional sensors to sense the operator, at 408, seat parameters are determined using the physical characteristics obtained from the output of each of the sensors. Example seat parameters include seat height, a lateral seat position, a longitudinal seat position, an amount of recline (e.g., an amount of angle defined between the seat back 211 and the seat base 209), an amount of swivel of the seat, and a tilt of the steering column 206. At 410, the seat parameters are applied automatically to the seat 204. In some implementations, the seat parameters are applied to the seat 204 prior to operator occupying the seat. In some implementations, one or more of the seat parameters is applied after the operator has occupied the seat.

In some implementations, an identity of the operator is determined, as indicated at 412. An identity of an operator may be determined by identifying or receiving an identifying aspect of the operator. For example, a sensor, such as a camera, may be used to identify the operator using facial recognition. In other implementations, the operator may be identified using a device (e.g., a smart device or RFID device) or another type of identifying credential.

Although the example method 400 of FIG. 4 is shown and described, the method 400 may be altered and remain within the scope of the present disclosure. For example, in some instances, one or more features of the method 400 may be omitted or added. For example, the features represented by an identification credential, such as those described above. At 414, the determined seat parameters are associated with the identity of the operator, and, at 416, the seat parameters are stored in association with the identified operator. In some instances, the stored seat parameters and identity of the operator are stored locally on the vehicle. In other implementations, the stored seat parameters and identity of the operator are stored remotely. In some instances, the remotely stored seat parameters are made available to a variety of vehicles or machines, and, upon recognition of the operator in association with another one of the vehicles or machines, the seat parameters are applied automatically in anticipation of use by the operator.

Without in any way limiting the scope, interpretation, or application of the claims appearing below, a technical effect of one or more of the example implementations disclosed herein is automatic determination of seat parameters for an operator of a vehicle or machine. Another technical effect of one or more of the example implementations disclosed herein is the automatic application of the seat parameters to a seat of the vehicle or machine for use by the operator.

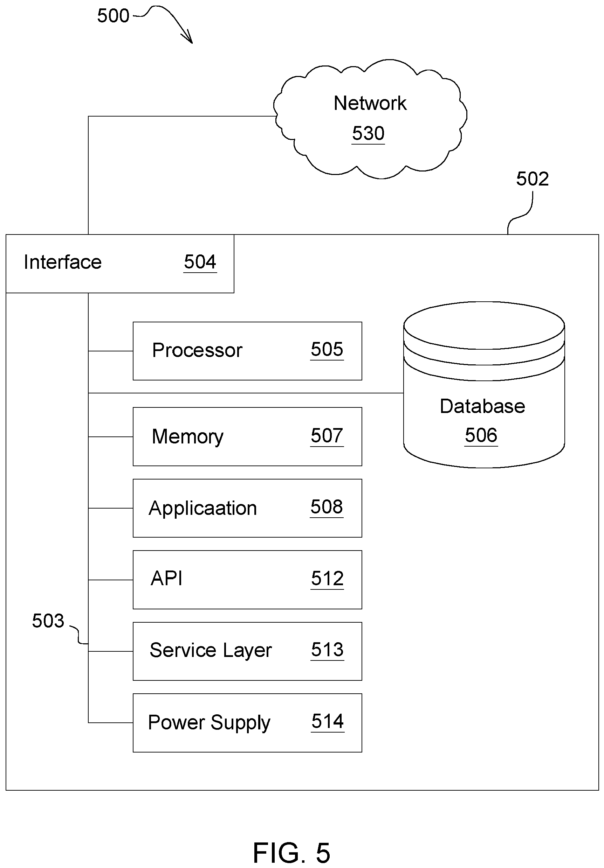

FIG. 5 is a block diagram of an example computer system 500 used to provide computational functionalities associated with described algorithms, methods, functions, processes, flows, and procedures described in the present disclosure, according to some implementations of the present disclosure. The illustrated computer 502 is intended to encompass any computing device such as a server, a desktop computer, a laptop/notebook computer, a wireless data port, a smart phone, a personal data assistant (PDA), a tablet computing device, or one or more processors within these devices, including physical instances, virtual instances, or both. The computer 502 can include input devices such as keypads, keyboards, and touch screens that can accept user information. Also, the computer 502 can include output devices that can convey information associated with the operation of the computer 502. The information can include digital data, visual data, audio information, or a combination of information. The information can be presented in a graphical user interface (UI) (or GUI).

The computer 502 can serve in a role as a client, a network component, a server, a database, a persistency, or components of a computer system for performing the subject matter described in the present disclosure. The illustrated computer 502 is communicably coupled with a network 530. In some implementations, one or more components of the computer 502 can be configured to operate within different environments, including cloud-computing-based environments, local environments, global environments, and combinations of environments.

At a high level, the computer 502 is an electronic computing device operable to receive, transmit, process, store, and manage data and information associated with the described subject matter. According to some implementations, the computer 502 can also include, or be communicably coupled with, an application server, an email server, a web server, a caching server, a streaming data server, or a combination of servers.

The computer 502 can receive requests over network 530 from a client application (for example, executing on another computer 502). The computer 502 can respond to the received requests by processing the received requests using software applications. Requests can also be sent to the computer 502 from internal users (for example, from a command console), external (or third) parties, automated applications, entities, individuals, systems, and computers.

Each of the components of the computer 502 can communicate using a system bus 503. In some implementations, any or all of the components of the computer 502, including hardware or software components, can interface with each other or the interface 504 (or a combination of both), over the system bus 503. Interfaces can use an application programming interface (API) 512, a service layer 513, or a combination of the API 512 and service layer 513. The API 512 can include specifications for routines, data structures, and object classes. The API 512 can be either computer-language independent or dependent. The API 512 can refer to a complete interface, a single function, or a set of APIs.

The service layer 513 can provide software services to the computer 502 and other components (whether illustrated or not) that are communicably coupled to the computer 502. The functionality of the computer 502 can be accessible for all service consumers using this service layer. Software services, such as those provided by the service layer 513, can provide reusable, defined functionalities through a defined interface. For example, the interface can be software written in JAVA, C++, or a language providing data in extensible markup language (XML) format. While illustrated as an integrated component of the computer 502, in alternative implementations, the API 512 or the service layer 513 can be stand-alone components in relation to other components of the computer 502 and other components communicably coupled to the computer 502. Moreover, any or all parts of the API 512 or the service layer 513 can be implemented as child or sub-modules of another software module, enterprise application, or hardware module without departing from the scope of the present disclosure.

The computer 502 includes an interface 504. Although illustrated as a single interface 504 in FIG. 5, two or more interfaces 504 can be used according to particular needs, desires, or particular implementations of the computer 502 and the described functionality. The interface 504 can be used by the computer 502 for communicating with other systems that are connected to the network 530 (whether illustrated or not) in a distributed environment. Generally, the interface 504 can include, or be implemented using, logic encoded in software or hardware (or a combination of software and hardware) operable to communicate with the network 530. More specifically, the interface 504 can include software supporting one or more communication protocols associated with communications. As such, the network 530 or the interface's hardware can be operable to communicate physical signals within and outside of the illustrated computer 502.

The computer 502 includes a processor 505. Although illustrated as a single processor 505 in FIG. 5, two or more processors 505 can be used according to particular needs, desires, or particular implementations of the computer 502 and the described functionality. Generally, the processor 505 can execute instructions and can manipulate data to perform the operations of the computer 502, including operations using algorithms, methods, functions, processes, flows, and procedures as described in the present disclosure.

The computer 502 also includes a database 506 that can hold data for the computer 502 and other components connected to the network 530 (whether illustrated or not). For example, database 506 can be an in-memory, conventional, or a database storing data consistent with the present disclosure. In some implementations, database 506 can be a combination of two or more different database types (for example, hybrid in-memory and conventional databases) according to particular needs, desires, or particular implementations of the computer 502 and the described functionality. Although illustrated as a single database 506 in FIG. 5, two or more databases (of the same, different, or combination of types) can be used according to particular needs, desires, or particular implementations of the computer 502 and the described functionality. While database 506 is illustrated as an internal component of the computer 502, in alternative implementations, database 506 can be external to the computer 502.

The computer 502 also includes a memory 507 that can hold data for the computer 502 or a combination of components connected to the network 530 (whether illustrated or not). Memory 507 can store any data consistent with the present disclosure. In some implementations, memory 507 can be a combination of two or more different types of memory (for example, a combination of semiconductor and magnetic storage) according to particular needs, desires, or particular implementations of the computer 502 and the described functionality. Although illustrated as a single memory 507 in FIG. 5, two or more memories 507 (of the same, different, or combination of types) can be used according to particular needs, desires, or particular implementations of the computer 502 and the described functionality. While memory 507 is illustrated as an internal component of the computer 502, in alternative implementations, memory 507 can be external to the computer 502.

The application 508 can be an algorithmic software engine providing functionality according to particular needs, desires, or particular implementations of the computer 502 and the described functionality. For example, application 508 can serve as one or more components, modules, or applications. Further, although illustrated as a single application 508, the application 508 can be implemented as multiple applications 508 on the computer 502. In addition, although illustrated as internal to the computer 502, in alternative implementations, the application 508 can be external to the computer 502.

The computer 502 can also include a power supply 514. The power supply 514 can include a rechargeable or non-rechargeable battery that can be configured to be either user- or non-user-replaceable. In some implementations, the power supply 514 can include power-conversion and management circuits, including recharging, standby, and power management functionalities. In some implementations, the power-supply 514 can include a power plug to allow the computer 502 to be plugged into a wall socket or a power source to, for example, power the computer 502 or recharge a rechargeable battery.

There can be any number of computers 502 associated with, or external to, a computer system containing computer 502, with each computer 502 communicating over network 530. Further, the terms "client," "user," and other appropriate terminology can be used interchangeably, as appropriate, without departing from the scope of the present disclosure. Moreover, the present disclosure contemplates that many users can use one computer 502 and one user can use multiple computers 502.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs. Each computer program can include one or more modules of computer program instructions encoded on a tangible, non-transitory, computer-readable computer-storage medium for execution by, or to control the operation of, data processing apparatus. Alternatively, or additionally, the program instructions can be encoded in/on an artificially generated propagated signal. The example, the signal can be a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of computer-storage mediums.

The terms "data processing apparatus," "computer," and "electronic computer device" (or equivalent as understood by one of ordinary skill in the art) refer to data processing hardware. For example, a data processing apparatus can encompass all kinds of apparatus, devices, and machines for processing data, including by way of example, a programmable processor, a computer, or multiple processors or computers. The apparatus can also include special purpose logic circuitry including, for example, a central processing unit (CPU), a field programmable gate array (FPGA), or an application-specific integrated circuit (ASIC). In some implementations, the data processing apparatus or special purpose logic circuitry (or a combination of the data processing apparatus or special purpose logic circuitry) can be hardware- or software-based (or a combination of both hardware- and software-based). The apparatus can optionally include code that creates an execution environment for computer programs, for example, code that constitutes processor firmware, a protocol stack, a database management system, an operating system, or a combination of execution environments. The present disclosure contemplates the use of data processing apparatuses with or without conventional operating systems, for example, LINUX, UNIX, WINDOWS, MAC OS, ANDROID, or IOS.

A computer program, which can also be referred to or described as a program, software, a software application, a module, a software module, a script, or code, can be written in any form of programming language. Programming languages can include, for example, compiled languages, interpreted languages, declarative languages, or procedural languages. Programs can be deployed in any form, including as stand-alone programs, modules, components, subroutines, or units for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files storing one or more modules, sub-programs, or portions of code. A computer program can be deployed for execution on one computer or on multiple computers that are located, for example, at one site or distributed across multiple sites that are interconnected by a communication network. While portions of the programs illustrated in the various figures may be shown as individual modules that implement the various features and functionality through various objects, methods, or processes, the programs can instead include a number of sub-modules, third-party services, components, and libraries. Conversely, the features and functionality of various components can be combined into single components as appropriate. Thresholds used to make computational determinations can be statically, dynamically, or both statically and dynamically determined.

The methods, processes, or logic flows described in this specification can be performed by one or more programmable computers executing one or more computer programs to perform functions by operating on input data and generating output. The methods, processes, or logic flows can also be performed by, and apparatus can also be implemented as, special purpose logic circuitry, for example, a CPU, an FPGA, or an ASIC.

Computers suitable for the execution of a computer program can be based on one or more of general and special purpose microprocessors and other kinds of CPUs. The elements of a computer are a CPU for performing or executing instructions and one or more memory devices for storing instructions and data. Generally, a CPU can receive instructions and data from (and write data to) a memory. A computer can also include, or be operatively coupled to, one or more mass storage devices for storing data. In some implementations, a computer can receive data from, and transfer data to, the mass storage devices including, for example, magnetic, magneto-optical disks, or optical disks. Moreover, a computer can be embedded in another device, for example, a mobile telephone, a personal digital assistant (PDA), a mobile audio or video player, a game console, a global positioning system (GPS) receiver, or a portable storage device such as a universal serial bus (USB) flash drive.

Computer-readable media (transitory or non-transitory, as appropriate) suitable for storing computer program instructions and data can include all forms of permanent/non-permanent and volatile/non-volatile memory, media, and memory devices. Computer-readable media can include, for example, semiconductor memory devices such as random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices. Computer-readable media can also include, for example, magnetic devices such as tape, cartridges, cassettes, and internal/removable disks. Computer-readable media can also include magneto-optical disks and optical memory devices and technologies including, for example, digital video disc (DVD), CD-ROM, DVD+/-R, DVD-RAM, DVD-ROM, HD-DVD, and BLURAY. The memory can store various objects or data, including caches, classes, frameworks, applications, modules, backup data, jobs, web pages, web page templates, data structures, database tables, repositories, and dynamic information. Types of objects and data stored in memory can include parameters, variables, algorithms, instructions, rules, constraints, and references. Additionally, the memory can include logs, policies, security or access data, and reporting files. The processor and the memory can be supplemented by, or incorporated in, special purpose logic circuitry.

Implementations of the subject matter described in the present disclosure can be implemented on a computer having a display device for providing interaction with a user, including displaying information to (and receiving input from) the user. Types of display devices can include, for example, a cathode ray tube (CRT), a liquid crystal display (LCD), a light-emitting diode (LED), and a plasma monitor. Display devices can include a keyboard and pointing devices including, for example, a mouse, a trackball, or a trackpad. User input can also be provided to the computer through the use of a touchscreen, such as a tablet computer surface with pressure sensitivity or a multi-touch screen using capacitive or electric sensing. Other kinds of devices can be used to provide for interaction with a user, including to receive user feedback including, for example, sensory feedback including visual feedback, auditory feedback, or tactile feedback. Input from the user can be received in the form of acoustic, speech, or tactile input. In addition, a computer can interact with a user by sending documents to, and receiving documents from, a device that is used by the user. For example, the computer can send web pages to a web browser on a user's client device in response to requests received from the web browser.

The term "graphical user interface," or "GUI," can be used in the singular or the plural to describe one or more graphical user interfaces and each of the displays of a particular graphical user interface. Therefore, a GUI can represent any graphical user interface, including, but not limited to, a web browser, a touch screen, or a command line interface (CLI) that processes information and efficiently presents the information results to the user. In general, a GUI can include a plurality of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back-end component, for example, as a data server, or that includes a middleware component, for example, an application server. Moreover, the computing system can include a front-end component, for example, a client computer having one or both of a graphical user interface or a Web browser through which a user can interact with the computer. The components of the system can be interconnected by any form or medium of wireline or wireless digital data communication (or a combination of data communication) in a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) (for example, using 802.11 a/b/g/n or 802.20 or a combination of protocols), all or a portion of the Internet, or any other communication system or systems at one or more locations (or a combination of communication networks). The network can communicate with, for example, Internet Protocol (IP) packets, frame relay frames, asynchronous transfer mode (ATM) cells, voice, video, data, or a combination of communication types between network addresses.

Wireless connections within the scope of the present disclosure include wireless protocols, such as, 802.15 protocols (e.g., a BLUETOOTH^{®}), 802.11 protocols, 802.20 protocols (e.g., WI-FI^{®}), or a combination of different wireless protocols.

The computing system can include clients and servers. A client and server can generally be remote from each other and can typically interact through a communication network. The relationship of client and server can arise by virtue of computer programs running on the respective computers and having a client-server relationship.

Cluster file systems can be any file system type accessible from multiple servers for read and update. Locking or consistency tracking may not be necessary since the locking of exchange file system can be done at application layer. Furthermore, Unicode data files can be different from non-Unicode data files.

While this specification contains many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any suitable sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the spirit and scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

While the above describes example implementations of the present disclosure, these descriptions should not be viewed in a limiting sense. Rather, other variations and modifications may be made without departing from the scope and spirit of the present disclosure as defined in the appended claims.

## Claims

1. A system for automatically establishing a seating parameter of a seat for an operator of a vehicle, the system comprising:
a sensor configured to sense an aspect of a body of an operator of the vehicle and generate a signal representative of the sensed aspect of the body of the operator;
an adjustable seat; and
a controller comprising a processor configured to:
receive the signal from the sensor;
identify a physical characteristic of the operator based on the received signal;
determine a seating parameter based on the physical characteristic; and
output a control signal representative of the determined seating parameter to the adjustable seat to alter a configuration of the seat.

2. The system of claim 1, wherein the sensor is a first sensor configured to sense a first portion of the body of an operator of the vehicle and generate a first signal representative thereof, and
further comprising a second sensor configured to sense a second portion of the body of the operator and generate a second signal representative of the second portion of the body of the operator.

3. The system of claim 1 or 2, wherein the processor of the controller being configured to receive the signal from the sensor comprises the processor of the controller being configured to:
receive the first signal from the first sensor; and
receive the second signal from the second sensor,
wherein the processor of the controller being configured to identify the physical characteristic of the operator comprises the processor of the controller being configured to:
identify a first physical characteristic of the operator based on the first signal; and
identify a second physical characteristic of the operator based on the second signal, and
wherein the processor of the controller being configured to determine the seating parameter based on the physical characteristic comprises the processor of the controller being configured to determine the seating parameter based on the first physical characteristic and the second physical characteristic.

4. The system according to at least one of the preceding claims, wherein the seating parameter comprises at least one of a height of the adjustable seat, a lateral position of the adjustable seat, a longitudinal position of the adjustable seat, an amount of recline of the adjustable seat, and an amount of swivel of the adjustable seat.

5. The system according to at least one of the preceding claims, further comprising a steering column, and wherein the seating parameter comprises an angular tilt of the steering column.

6. The system according to at least one of the preceding claims, wherein the physical characteristic comprises at least one of an anthropometric parameter or a weight of the operator.

7. The system according to at least one of the preceding claims, wherein the anthropometric parameter comprises at least one of a length of at least a portion of an arm of the operator, a length of at least a portion of a leg of the operator, and a length of a torso of the operator.

8. The system according to at least one of the preceding claims, wherein the sensor is a weight sensor configured to detect a weight of the operator.

9. The system according to at least one of the preceding claims, wherein the sensor is an image sensor.

10. A method of automatically establishing a seating parameter of a seat for an operator of a vehicle, the method comprising:
sensing, with a sensor, an operator of a vehicle;
outputting a signal representative of the sensed operator of the vehicle;
determining, with an electronic controller, a seating parameter based on the outputted signal; and
adjusting a configuration of a seat based on the determined seating parameter.

11. The method of claim 10, wherein sensing, with a sensor, the operator of the vehicle comprises one of capturing an image of the operator or sensing a weight of the operator of the vehicle.

12. The method of claim 10 or 11, wherein determining, with the electronic controller, the seating parameter comprises determining a physical characteristic of the operator of the vehicle.

13. The method according to at least one of the claims 10 to 12, wherein determining the physical characteristic of the operator of the vehicle comprises determining an anthropometric parameter of the operator of the vehicle.

14. The method according to at least one of the claims 10 to 13, wherein adjusting the configuration of the seat based on the determined seating parameter comprises at least one of adjusting a vertical seating position, a lateral seating position, a longitudinal seating position, an amount of seat recline, an amount of seat swivel, and an angular position of a steering column of the vehicle.

15. The method according to at least one of the claims 10 to 14, wherein sensing, with the sensor, the operator of the vehicle comprises sensing the operator of the vehicle with a plurality of sensors, wherein outputting a signal representative of the sensed operator of the vehicle comprises outputting a signal from each of the plurality of sensors, and wherein each sensor output corresponds to a different portion of a body of the operator of the vehicle.
